# EUROPEAN PATENT SPECIFICATION

(11) **EP 4 390 473 B1**
(45) Date of publication and mention of the grant of the patent: **03.12.2025**
(21) Application number: 22858518.8
(22) Date of filing: 18.08.2022
(51) Int. Cl.: G02B 5/18, B32B 23/20, B32B 27/30, B44C 1/17, B42D 25/328

(54) **RELIEF STRUCTURE-BEARING TRANSFER FOIL**
RELIEFSTRUKTURTRAGENDE TRANSFERFOLIE
FEUILLE DE TRANSFERT PORTANT UNE STRUCTURE EN RELIEF

(30) Priority: 19.08.2021 JP 2021133833
(43) Date of publication of application: 26.06.2024
(73) Proprietor: TOPPAN INC., Tokyo 110-0016 (JP)
(72) Inventor: MINAMIKAWA, Naoki, Tokyo 110-0016 (JP)
(74) Representative: Hoffmann Eitle
(86) International application number: PCT/JP2022/031240
(87) International publication number: WO 2023/022201

(56) References cited:
- EP-B1- 1 752 307
- JP-A- 2002 192 895
- JP-A- 2006 309 205
- JP-A- 2008 162 260
- JP-A- 2010 005 888
- JP-A- 2016 060 046
- US-A1- 2007 267 130

## Description

### [Technical Field]

The present invention relates to a transfer foil. In particular, the present invention relates to a transfer foil that has a relief structure exerting an optical effect such as diffraction and is required to have high durability.

This application claims the benefit of priority from Japanese Patent Application No. 2021-133833 filed in Japan on August 19, 2021.

### [Background Art]

Known means for transferring and adhering a relief structure such as a hologram or a diffraction grating to an article include a method of attaching a relief structure in the form of a transfer foil to an article. On a support, a release layer, a relief forming layer having a relief structure such as a hologram or a diffraction grating, a reflective layer, and an adhesive layer are laminated in this order to form a transfer foil having a relief structure. A common method of attaching a transfer foil to an article is thermal pressure transfer by hot stamping or thermal transfer using a thermal head roll.

First, in thermal pressure transfer and thermal transfer, a transfer foil is placed between a heated metal marking tool or thermal head roll and a transfer object to which the transfer foil is to be transferred. Next, in thermal pressure transfer and thermal transfer, the transfer foil is pressed and heated instantaneously (for approximately 0.1 seconds to 1 second) using the marking tool or the roll, and then the transfer foil is peeled off from the support. In general, thermal pressure transfer is a transfer method primarily based on pressure at a heating temperature of approximately 100°C to 120°C and an applied pressure of approximately 300 Kg/cm². Thermal transfer is a transfer method primarily based on heat at a heating temperature of approximately 100°C to 120°C and an applied pressure of approximately 100 Kg/cm². Thermal pressure transfer is a transfer method that applies a higher pressure than thermal transfer and is suitable for the case where a transfer foil is transferred to a transfer object medium such as paper having a non-smooth surface.

Thus, a transfer foil is composed of a material having heat resistance and impact resistance to prevent the transfer foil from being damaged by heat or pressureduring transfer and attachment and to prevent the transfer foil attached to a transfer object from being damaged by external heat or impact.

In particular, in order to prevent damage to the relief structure having the function of exerting an optical effect, the heat resistance and impact resistance required for the material of the relief structure forming layer are important. For the material of the relief structure forming layer, significantly high temperature and pressure are required to shape uneven portions of the relief structure. This makes shaping processing difficult, leading to lower accuracy of relief structure shaping. Furthermore, a transfer foil having heat resistance and impact resistance as described above has poor transferability leading to the occurrence of burrs, chips, or the like, thus making it highly difficult to achieve high levels of all effects: accuracy of relief structure shaping, resistance to heat and pressure, and transferability.

Patent Literature 1 describes a method in which a cellulose-based material is used to allow a transfer foil to have higher heat resistance and pressure resistance. Patent Literature 1 presents a method in which a release layer contains a cellulose-based material having a high melting point to prevent cracks from being generated in a relief structure by thermal transfer using a thermal head.

However, the method does not have a sufficient effect in hot-stamping thermal pressure transfer that involves instantaneous application of high pressure.

Patent Literature 2 discloses a transfer foil being separably supported by a support, and comprising a first resin layer, a second resin layer, and a relief forming layer in this order from a side closer to the support. For said layers, acrylic resins are mentioned as possible materials.

### [Citation List]

### [Patent Literature]

[PTL 1] JP 2016-60046 A
[PTL 2] EP 1 752 307 B1

### [Summary of the Invention]

### [Technical Problem]

The problem to be solved by the present invention is to achieve high levels of three effects: accuracy of relief structure shaping, resistance to heat and pressure, and transferability of a transfer foil.

### [Solution to Problem]

The present invention is a transfer foil separably supported by a support.

The transfer foil includes a first resin layer, a second resin layer, and a relief forming layer in this order from a side closer to the support.

The first resin layer is composed of an acrylic resin having a glass transition temperature Tg of 95°C or higher.

The second resin layer and the relief forming layer are composed of a mixture of the acrylic resin, and a cellulose ester resin in which some of hydroxyl groups are urethane crosslinked.

The second resin layer has a higher melting point than the relief forming layer.

### [Advantageous Effects of the Invention]

The present invention achieves high level of three effects: accuracy of relief structure shaping, resistance to heat and pressure, and transferability of a transfer foil.

### [Brief Description of the Drawings]

Fig. 1 is a schematic cross-sectional view of a transfer foil according to an embodiment of the present invention.
Fig. 2 is a schematic diagram showing a relationship between the temperature and flexural modulus of a second resin layer and a relief forming layer of the present invention.
Fig. 3 is a table showing evaluation results obtained by changing Tg of an acrylic resin in a first resin layer and by using or not using urethane crosslinking.
Fig. 4 is a table showing evaluation results obtained by changing the mixing ratio of cellulose ester resin in the second resin layer.
Fig. 5 is a table showing evaluation results obtained by changing the mixing ratio of cellulose ester resin in the relief forming layer.
Fig. 6 is a table showing a relationship between the mixing ratio of cellulose ester resin in the second resin layer and the mixing ratio of cellulose ester resin in the relief forming layer.
Fig. 7 is a list of details of defects in the regions shown in Fig. 6 and presumed reasons for the defects.

### [Description of the Embodiments]

The material configuration of the present invention provides higher level of three effects: accuracy of relief structure shaping, resistance to heat and pressure, and transferability.

In order to address the issue of providing a transfer foil achieving contradiction of physical properties: accuracy of relief structure shaping, resistance to heat and pressure, and transferability, the present invention employs a layer composed of a mixture of an acrylic resin, and a cellulose ester resin in which some of the hydroxyl groups are urethane crosslinked, and focuses on allowing the transfer foil to include a plurality of layers obtained by changing the mixing ratio of acrylic resin and cellulose ester resin.

As an acrylic resin contained in a first resin layer of the transfer foil, an acrylic resin having a glass transition temperature Tg of 95°C or higher is selected. Such an acrylic resin is selected in order to impart the transfer foil with heat resistance sufficient to prevent transfer failure caused by an increase in adhesion to a support surface due to unintentional thermal melting of the first resin layer during transfer and in order to achieve better compatibility with a second resin layer that is laminated next.

Such an acrylic resin has, of acrylic resins produced by polymerizing methyl methacrylate (MMA), in particular, a functional group structure that involves no or a significantly small amount of copolymerization or addition of butyl methacrylate (BMA), styrene, or other monomers. An acrylic resin having such a structure has particularly good transparency and dimensional stability, high hardness, and a high melting point, protecting a relief structure of the transfer foil from external physical factors.

An acrylic resin that does not involve copolymerization of other monomers as described above has significantly good compatibility with a cellulose ester resin. Furthermore, an acrylic resin (refractive index: approximately 1.49) and a cellulose ester resin (refractive index: approximately 1.46 to 1.50) have highly similar refractive indices. Thus, the mixing of acrylic resin and cellulose ester resin minimizes reflection at an interface between the first resin layer and the second resin layer in contact with the first resin layer, and the attenuation of light intensity due to scattering in the second resin layer. Furthermore, the mixing of cellulose ester resin and acrylic resin reduces the adverse influence of birefringence of the cellulose ester resin. The reduction of the interface reflection, attenuation of light intensity, or birefringence described above is highly effective to allow the relief structure to externally exert an optical effect without attenuation.

In the layer configuration of the transfer foil, the second resin layer and a relief forming layer are both composed of a mixture of acrylic resin and cellulose ester resin in which some of the hydroxyl groups are urethane crosslinked, and the second resin layer has a higher melting point than the relief forming layer. The layer configuration achieves the following two effects.

First, the above layer configuration can achieve good accuracy of relief structure shaping processing, and impart the transfer foil with significantly higher heat resistance and pressure resistance.

The second resin layer having a higher melting point than the relief forming layer, which is a characteristic of the present invention, provides highly effective durability. The second resin layer having a high melting point is in contact with the relief forming layer, and is located between the relief forming layer and the first resin layer. External heat and pressure applied to the relief forming layer are partially dispersed in the second resin layer having a high melting point, reducing the thermal load on the relief forming layer. Thus, the uneven relief structure is less likely to be damaged by external heat and pressure. This enables the transfer foil to have significantly higher heat resistance to external factors during thermal pressure transfer and after attachment.

Thus, even when the relief forming layer is composed of a material having a lower melting point, the second resin layer having a higher melting point makes it possible to sufficiently maintain the heat resistance of the transfer foil. The relief forming layer composed of a material having a low melting point leads to a reduction in the processing temperature required to form a relief structure, that is, easy relief shaping processing, thus making it easy to maintain stable and good accuracy of the relief structure.

Secondly, the above layer configuration can allow the transfer foil to have higher heat resistance and pressure resistance without deterioration in transferability. The second effect is achieved, in particular, by mixing together an acrylic resin and a cellulose ester resin in which some of the hydroxyl groups are urethane crosslinked.

A cellulose ester resin is obtained by esterifying some of the hydroxyl groups of glucose units which are repeating units constituting cellulose. The cellulose ester resin contains approximately 1 to 5% non-esterified hydroxyl groups. Furthermore, a cellulose ester resin generally forms a strong hydrogen bonding network in or between the molecular chains, and thus has a higher glass transition temperature (Tg: approximately 130°C to 160°C) than an acrylic resin (Tg: 95°C to 105°C), achieving good heat resistance and impact resistance. On the other hand, a cellulose ester resin has poor thermoplasticity under conditions close to the transfer temperature conditions (approximately 100°C to 150°C for approximately 0.1 seconds to 1 second). In processing such as transfer of a transfer foil that involves instantaneous application of heat and pressure, the poor thermoplasticity induces defects due to cracks or transfer burrs on the transfer surface. More specifically, in thermal pressure transfer of a transfer foil including a layer composed of only a cellulose ester resin, the temperature range (100°C to 120°C) during transfer is lower than Tg (approximately 130°C to 160°C) of the cellulose ester resin. That is, the foil is transferred when the cellulose ester resin layer is divided into parts not because the cellulose ester resin layer is partially melted by heat but because the cellulose ester resin layer is cracked by pressure. Thus, defects such as cracks or transfer burrs on the transfer surface are presumably more likely to occur.

As a characteristic of the present invention, a cellulose ester resin (Tg: approximately 130°C to 160°C) is imparted with thermoplasticity around a transfer temperature of approximately 100°C to 120°C by mixing of the cellulose ester resin with an acrylic resin and urethane crosslinking of hydroxyl groups in the cellulose ester resin. The thermoplasticity around the transfer temperature imparted to the cellulose ester resin prevents the occurrence of cracks, transfer burrs, or the like during thermal pressure transfer, achieving better transferability.

The effects of urethanization of hydroxyl groups will be described in detail.

As a characteristic of the present invention, some of the hydroxyl groups in the cellulose ester resin are urethane crosslinked. Cellulose esters that are not urethane crosslinked are less likely to be entangled and more likely to be softened. On the other hand, urethane-crosslinked cellulose esters can have the required rigidity. Urethane crosslinking has advantageous effects, that is, urethane crosslinking in a cellulose ester resin achieves the effect of preventing the occurrence of cracks during transfer by allowing the cellulose ester resin to have better thermoplasticity in the transfer temperature range as described above, and the effect of reducing the occurrence of burrs and chips during attachment and transfer due to resin shrinkage occurring due to urethane crosslinking.

When hydroxyl groups of a cellulose ester resin are urethane crosslinked using a suitable isocyanate, a urethane crosslinking network is formed by 1 to 5 mass% hydroxyl groups in the rigid molecular network of the cellulose ester. The urethane crosslinking reaction causes a change in crosslinking density, volume contraction, or the like, leading to residual stress or residual strain in the material after curing. This achieves the effect of enabling easy separation of the transfer foil having a shape matching the shape of the marking tool from the support during thermal pressure transfer. This effect is particularly effective to reduce the occurrence of transfer burrs.

Preferable examples of the isocyanate include toluene diisocyanate (TDI) having a benzene ring structure. TDI is more likely to generate a residual stress or a residual strain in the material after curing. Furthermore, a urethane group formed by urethane crosslinking preferably has thermoplasticity (decreasing the peak of flexural modulus) around a transfer temperature of 100°C to 120°C.

An embodiment of the present invention will be described in detail below with reference to the drawings as appropriate. Components having the same or similar functions will be denoted by the same reference signs throughout the drawings, and redundant description will be omitted.

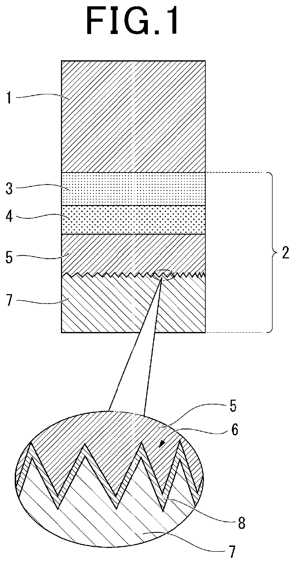

Fig. 1 is a schematic cross-sectional view of a transfer foil according to an embodiment of the present invention.

A transfer foil 2 shown in Fig. 1 is provided on one surface of a support 1 so as to be peelable from the surface. The transfer foil 2 includes a first resin layer 3, a second resin layer 4, a relief forming layer 5, and an adhesive layer 7 in this order from the side closer to the support 1. The transfer foil 2 further includes a relief structure 6 and a reflective layer 8 between the relief forming layer 5 and the adhesive layer 7.

### [Support]

The support 1 supports the transfer foil 2 until the transfer foil 2 is transferred to a transfer object to which the transfer foil 2 is to be transferred. The support 1 may be composed of a plastic film. Examples of the material for forming a plastic film include polyethylene terephthalate (PET), polyethylene naphthalate (PEN), and polypropylene (PP). The material for forming a film is preferably a material that is less likely to be deformed or degraded by heat, pressure, or the like applied to the support 1 during formation of the transfer foil 2. The support 1 may be composed of paper, synthetic paper, plastic multilayer paper, resin-impregnated paper, or the like, other than a plastic film.

### [First resin layer]

The first resin layer 3 holds the transfer foil 2 to prevent the transfer foil 2 from being separated from the support 1 until the transfer foil 2 is transferred to a transfer object. During transfer of the transfer foil 2 to a transfer object, heat, pressure, or a force in the direction away from the support 1 that is generated when the adhesive layer 7 is adhered to the transfer object is applied to the first resin layer 3. Thus, the first resin layer 3 serves to enable the transfer foil 2 to be separated from the support 1. Furthermore, after transfer, the first resin layer 3 has the function of protecting the surface of the transfer foil 2, to prevent the transfer foil 2 from being damaged by external heat or impact.

In the present embodiment, the material for forming the first resin layer 3 is composed of an acrylic resin having a glass transition temperature Tg of 95°C or higher. Such an acrylic resin has, of acrylic resins produced by polymerizing methyl methacrylate (MMA), in particular, a functional group structure that involves no or a significantly small amount of copolymerization or addition of butyl methacrylate (BMA), styrene, or other monomers. An acrylic resin having such a structure has particularly good transparency, high hardness, and a high melting point, thus not interfering with the optical effect of the relief structure. Furthermore, such an acrylic resin imparts the transfer foil 2 with durability against external physical factors. Specific examples of the material used as an acrylic resin include Dianal BR-84 (Dianal is a registered trademark) (glass transition temperature: 105°C; weight average molecular weight Mw: 120,000) manufactured by Mitsubishi Rayon Co., Ltd.

The first resin layer 3 may contain an additive such as a lubricant. Examples of the lubricant include polyethylene powder, paraffin wax, silicone, wax such as carnauba wax, and inorganic particles and material deterioration preventing agent of silica or the like. The amount of additive relative to the solid content of the entire material for forming the first resin layer 3 is preferably approximately 0.1 to 10.

The first resin layer 3 may not necessarily be directly in contact with the support 1. Another layer may be added between the first resin layer 3 and the support 1 to assist the function of the first resin layer 3. Specific examples of the layer to be added include a layer having a sea-island structure due to wax, resin, or inorganic particles to improve the transferability.

The first resin layer 3 preferably has a thickness of approximately 0.2 µm to 3 µm.

### [Second resin layer]

The second resin layer 4 is located between the first resin layer 3 and the relief forming layer 5, and imparts high heat resistance and pressure resistance to the transfer foil 2. The second resin layer 4 is composed of a mixture of an acrylic resin having a glass transition temperature Tg of 95°C or higher and a cellulose ester resin in which some of the hydroxyl groups are urethane crosslinked. The second resin layer 4 has a higher melting point than the relief forming layer 5. That is, when the second resin layer 4 and the relief forming layer 5 contain a cellulose ester resin having the same glass transition temperature Tg, the second resin layer 4 contains a higher ratio of cellulose ester resin than the relief forming layer 5. The glass transition temperature (Tg: approximately 130°C to 160°C) of a cellulose ester resin is higher than the glass transition temperature (Tg: 95°C to 105°C) of an acrylic resin. Thus, the second resin layer 4 containing a higher ratio of cellulose ester resin has a material configuration closer to that of the cellulose ester resin, and has a higher melting point.

Examples of the cellulose ester resin contained in the second resin layer 4 include a cellulose acetate resin, a cellulose acetate butyrate resin, a cellulose acetate propionate resin, and a cellulose nitrate.

A cellulose ester resin contains hydroxyl groups at a weight ratio of 1 to 5%. In the present invention, hydroxyl groups in the cellulose ester resin are urethane crosslinked to achieve better transferability. A change in resin density, volume contraction, or the like in the layer occurring due to the urethane crosslinking reaction presumably leads to residual stress or residual strain in the material of the layer, achieving the effect of enabling easy separation of the transfer foil having a shape matching the shape of the marking tool from the support during thermal pressure transfer. A cellulose ester resin containing a high ratio of hydroxyl groups is effective to allow the transfer foil 2 to have better transferability, but also causes the transfer foil 2 to have lower resistance to organic solvents. Thus, the cellulose ester resin preferably contains an appropriate ratio of hydroxyl groups. In the present invention, the ratio of hydroxyl groups in the cellulose ester resin is approximately 1 to 3%. Specific examples of the material used as a cellulose ester resin include CAB-381-2 (glass transition temperature: 133°C; weight average molecular weight Mw: 40,000; hydroxyl group content ratio: 1.3%) manufactured by Eastman Chemical Company.

The hydroxyl group content ratio in a resin is the ratio of the amount of hydroxyl groups to the average molecular weight of the resin, and is expressed in units of mass%.

Diisocyanate may be used as an isocyanate compound for urethane crosslinking of hydroxyl groups. Examples of diisocyanate include toluene diisocyanate (TDI) and hexamethylene diisocyanate (HDI).

A product used as toluene diisocyanate may be, for example, Coronate 2030 (Coronate is a registered trademark) manufactured by Nippon Polyurethane Industry Co., Ltd.

A product used as hexamethylene diisocyanate may be, for example, Takenate D-160N (Takenate is a registered trademark) manufactured by Mitsui Chemicals, Inc.

A diisocyanate having a benzene ring structure is preferable from the viewpoint of easy generation of a residual stress or a residual strain in the layer after the crosslinking reaction. Furthermore, toluene diisocyanate, having a benzene ring structure, may be used. The weight ratio of hydroxyl groups to cellulose ester resin in the second resin layer 4 is 5% or less, which is significantly low; thus, in practice, before reacting with the target hydroxyl groups, isocyanate often reacts with other functional groups and is deactivated. Considering this point, in order to achieve a sufficient effect of urethane crosslinking in the present invention, the amount of isocyanate required for urethane crosslinking is preferably set so that the molar ratio of isocyanate to hydroxyl groups (NCO/OH ratio) is 1.5 (the amount of isocyanate is 1.5 times the amount of hydroxyl groups). The molar ratio may be 1.0 or more and 3.0 or less. Specific examples of the material used as isocyanate include Coronate 2030 (Coronate is a registered trademark) (quick drying type; NCO content: 8%; solid content: 50%) manufactured by Nippon Polyurethane Industry Co., Ltd.

The number of urethane functional groups is preferably 2 to 10, and more preferably 1 to 5. The number of urethane functional groups is particularly preferably 2 or 3.

### [Relief forming layer]

The relief forming layer 5 is placed in contact with the second resin layer 4. In the present embodiment, the second resin layer 4 and the relief forming layer 5 are composed of the same type of material, and the relief forming layer 5 has a lower melting point than the second resin layer 4. This configuration allows maintaining the heat resistance of the transfer foil 2, and leads to a reduction in the processing temperature required to form the relief structure 6 (described later), that is, easy relief shaping processing. This makes it easy to maintain stable and good accuracy of the relief structure 6.

The relief forming layer 5 and the second resin layer 4 may be composed of an acrylic resin and a cellulose ester resin so that the conditions of the present invention are satisfied. That is, as long as the acrylic resin has a Tg of 95°C or higher, some of the hydroxyl groups in the cellulose ester resin are urethane crosslinked, and the relief forming layer 5 has a lower melting point than the second resin layer 4, the relief forming layer 5 and the second resin layer 4 may not necessarily be composed of exactly the same material. Thus, for example, the second resin layer 4 and the relief forming layer 5 may contain cellulose ester resins having different glass transition points, different molecular weights, or different amounts of hydroxyl groups. However, in such a case, the materials need to be selected considering the compatibility of the resins to prevent turbidity caused by mixing of the resins.

The relief forming layer 5 may contain an additive such as a lubricant to facilitate shaping processing for the relief structure 6. Examples of the lubricant include a silicone additive and a fluorine additive. The amount of additive relative to the solid content of the entire material for forming the relief forming layer 5 is preferably approximately 0.1 to 10.

### [Relief structure]

The relief structure 6 is composed of a fine uneven structure. The relief structure 6 has an optical effect such as an optical diffraction effect, a selective reflection effect or an antireflection effect, an isotropic or anisotropic scattering effect, a light collection effect, or a polarized reflection effect. Thus, the relief structure 6 achieves the effect of preventing counterfeiting and tampering and the effect of achieving better designability in visual observation, detection using a machine, or the like. The relief structure 6 may be composed of a combination of relief portions having one or more optical effects.

The relief structure 6 typically has a specific periodic pattern or a random pattern so that uneven portions of the relief structure 6 are arranged with a height of 0.01 µm to 10 µm in the thickness direction and at intervals of 0.01 µm to 10 µm in the in-plane direction.

### [Reflective layer]

The reflective layer 8 is a layer provided to allow easy observation of the optical effect of the relief structure 6. Examples of the material of the reflective layer 8 include aluminum, and transparent ceramic materials such as zinc sulfide and titanium dioxide. Aluminum can be used to form a high-gloss opaque film at low cost, and is easy to handle. Transparent ceramic materials have a high refractive index to visible light, and are easy to process. The reflective layer 8 preferably has a thickness of 100 to 800 nm. The reflective layer 8 can be formed by vacuum deposition, sputtering, or the like.

### [Adhesive layer]

The adhesive layer 7 allows the transfer foil 2 to be attached to a transfer object. The adhesive layer 7 is inactive at room temperature, and is activated by an external factor such as heat or pressure to exert the effect of allowing the transfer foil 2 to be adhered to a transfer object. Examples of the material for forming the adhesive layer 7 include a thermoplastic resin, a thermosetting resin, an ultraviolet curable resin, and an electron beam curable resin. More specific examples include a modified acrylic resin, a polyester resin, and a urethane resin.

Examples of the method of forming the adhesive layer 7, the first resin layer 3, the second resin layer 4, and the relief forming layer 5 include, but are not limited to, known printing methods such as gravure printing, flexographic printing, screen printing, and offset printing.

Each of the above layers may have a thickness of approximately 0.2 to 5 µm.

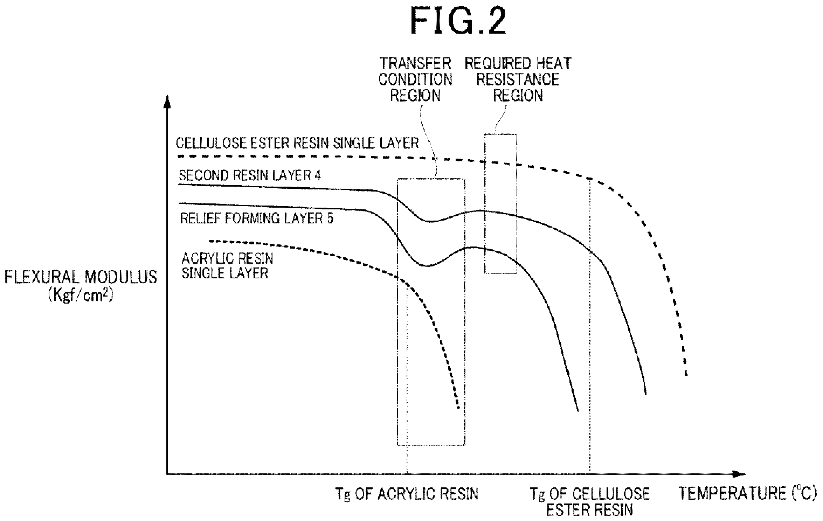

Fig. 2 is a schematic diagram showing a relationship between the temperature and flexural modulus of the second resin layer 4 and the relief forming layer 5 of the present invention.

In Fig. 2, the vertical axis indicates the flexural modulus (Pa or Kgf/cm²), and the horizontal axis indicates the temperature (°C). Fig. 2 schematically shows the temperature dependence of the flexural modulus of a cellulose ester resin single layer, an acrylic resin single layer, and the second resin layer 4 and the relief forming layer 5 composed of a mixture of a cellulose ester resin and an acrylic resin. Furthermore, in Fig. 2, the rectangular regions determined by a temperature range and a flexural modulus range indicate a transfer condition region (a condition region with good transferability) and a heat resistance region required for the transfer foil 2. The present invention aims to implement a transfer foil having a temperature dependence of flexural modulus including both of the two regions. In order to facilitate understanding, Fig. 2 shows the flexural modulus of the second resin layer 4 and the relief forming layer 5 composed of a material having the highest melting point of the materials of the layers of the transfer foil 2.

As shown in Fig. 2, in each of the cellulose ester resin single layer and the acrylic resin single layer, after the temperature approaches the glass transition temperature Tg, the flexural modulus is sharply reduced due to thermal softening. In comparison of the two layers, the cellulose ester resin single layer has a higher overall flexural modulus than the acrylic resin single layer. Furthermore, a cellulose ester resin has a higher Tg than an acrylic resin; thus, the reduction in the flexural modulus of the cellulose ester resin single layer occurs in a higher temperature range than the reduction in the flexural modulus of the acrylic resin single layer.

The behavior of the cellulose ester resin single layer overlaps with part of the required heat resistance region; thus, the cellulose ester resin single layer has sufficient heat resistance. However, the behavior of the cellulose ester resin single layer does not overlap with the transfer condition region. This shows that the flexural modulus of the cellulose ester resin single layer is hardly reduced at the transfer condition temperature; thus, the cellulose ester resin single layer is less likely to be divided into parts during transfer. That is, transfer of the transfer foil having a shape matching the shape of the marking tool is less likely to occur.

On the other hand, unlike the cellulose ester resin single layer, the behavior of the acrylic resin single layer overlaps with the transfer condition region, but does not overlap with the required heat resistance region. This shows that the acrylic resin single layer has good transferability, but does not have heat resistance required for the transfer foil.

Based on the obtained findings, the inventor has employed the second resin layer 4 and the relief forming layer 5 composed of a mixture of an acrylic resin and a cellulose ester resin. This successfully allows the behaviors of the second resin layer 4 and the relief forming layer 5 to have the advantages of both the acrylic resin single layer and the cellulose ester resin single layer. This enables the behaviors of the second resin layer 4 and the relief forming layer 5 to overlap with both the transfer condition region and the required heat resistance region as shown in Fig. 2.

In the second resin layer 4 and the relief forming layer 5 according to the present embodiment, in the transfer temperature range, the acrylic resin contained in the layers is thermally softened, leading to a reduction in the flexural modulus, thus achieving good transferability. At higher temperatures, presumably, the cellulose ester resin contained in the layers is not excessively softened and maintains a constant flexural modulus, achieving a transfer foil having good heat resistance.

The present invention will be described in detail below by way of specific examples. In the following examples, the term "part(s)" refers to part(s) by mass and the term "ratio" refers to mass ratio.

A plurality of types of samples having the same layer configuration as the transfer foil 2 were prepared by changing some of the materials for forming the first resin layer 3, the second resin layer 4, and the relief forming layer 5, and the samples were evaluated.

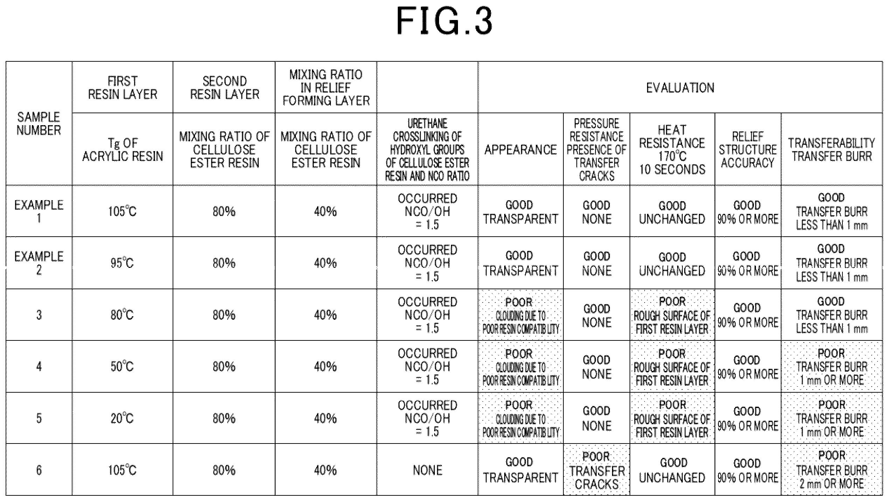

Figs. 3 to 5 are tables showing the content of the prepared samples. Samples corresponding to the transfer foil 2 of the present embodiment are denoted as "Example" with a sample number.

Details of the materials and preparation procedure for sample number 1 shown in Fig. 3 will be described.

### (Materials)

### <Support 1>

Lumirror 25T60 (Toray Industries, Inc.)

### <Acrylic resin contained in first resin layer 3>

Dianal BR-84 (Tg = 105°C) manufactured by Mitsubishi Rayon Co., Ltd.
Copolymerization of MMA (a plurality of types of MMA monomers were copolymerized)

### <Acrylic resin contained in second resin layer 4 and relief forming layer 5>

Dianal BR-84 (Tg = 105°C) manufactured by Mitsubishi Rayon Co., Ltd.
Copolymerization of MMA

### <Cellulose ester resin contained in second resin layer 4 and relief forming layer 5>

CAB-381-2 (Tg = 133°C) manufactured by Eastman Chemical Company

### <Isocyanate used for crosslinking of hydroxyl groups of cellulose ester resin contained in second resin layer 4 and relief forming layer 5>

Coronate 2030 manufactured by Nippon Polyurethane Industry Co., Ltd.

### <Reflective layer 8>

Aluminum

### <Adhesive layer 7>

Modified olefine resin 30 parts
Urethane resin 60 parts
Silica particles (maximum diameter: 10 µm) 10 parts
Organic solvent 900 parts

### (Preparation procedure)

### <Method of forming first resin layer 3, second resin layer 4, relief forming layer 5, and adhesive layer 7>

The material of each layer was dissolved or dispersed in an organic solvent to form an ink, and coating with the ink was performed by gravure printing.

### <Method of forming relief structure 6>

A metal cylinder plate including a relief structure having uneven portions with a predetermined height and pitch was pressed against the relief forming layer 5 at a press pressure of 196 kPa (2 Kgf/cm²), a press temperature of 220°C, and a press speed of 10 m/min to perform shaping processing, thus forming the relief structure 6.

### <Method of forming reflective layer 8>

The reflective layer 8 was formed on the relief structure 6 by vacuum deposition.

### <Method of urethane crosslinking hydroxyl groups of cellulose ester resin contained in second resin layer 4 and relief forming layer 5>

After coating, the layers were stored in an oven at 60°C for 10 days to promote a urethane crosslinking reaction.

Sample numbers 2 to 5 shown in Fig. 3 were obtained by changing Tg of the acrylic resin in the first resin layer 3 of sample number 1. The following acrylic resins were used.

### <Sample number 2>

Dianal BR-82 (Tg = 95°C) manufactured by Mitsubishi Rayon Co., Ltd.
Copolymerization of MMA

### <Sample number 3>

Dianal BR-95 (Tg = 80°C) manufactured by Mitsubishi Rayon Co., Ltd.
Copolymerization of MMA and other monomers

### <Sample number 4>

Dianal BR-101 (Tg = 50°C) manufactured by Mitsubishi Rayon Co., Ltd. Copolymerization of MMA and other monomers

### <Sample number 5>

Dianal BR-1122 (Tg = 20°C) manufactured by Mitsubishi Rayon Co., Ltd.
Copolymerization of MMA and other monomers

Sample number 6 was prepared in the same manner as sample number 1 except that no isocyanate was added to (i.e., no urethane crosslinking occurred in) sample number 6.

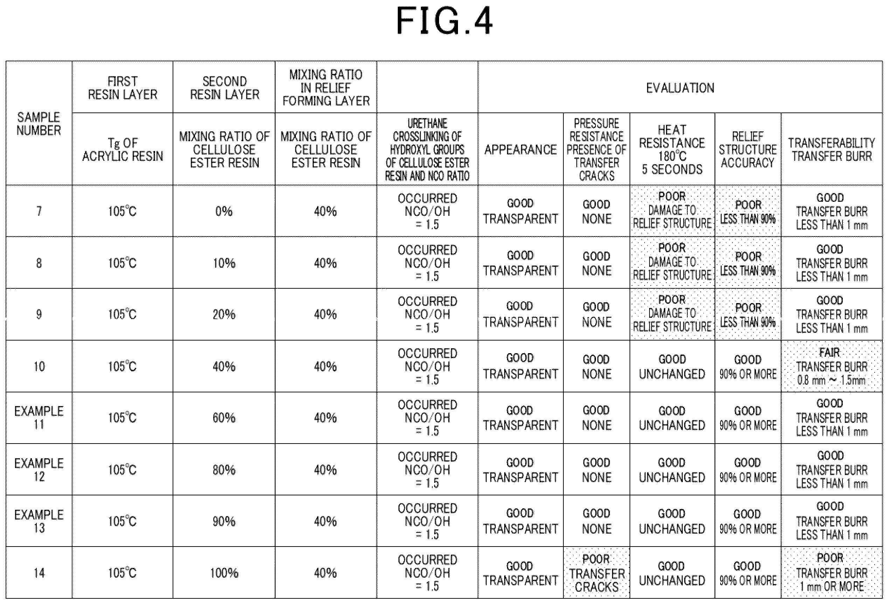

Sample numbers 7 to 14 shown in Fig. 4 were obtained by changing the mixing ratio of cellulose ester resin in the second resin layer 4 of sample number 1.

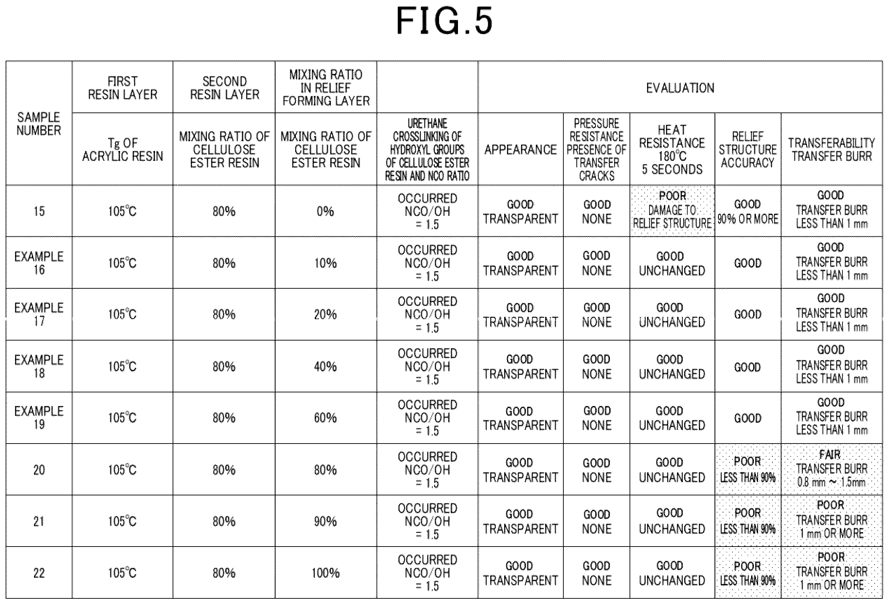

Sample numbers 15 to 22 shown in Fig. 5 were obtained by changing the mixing ratio of cellulose ester resin in the relief forming layer 5 of sample number 1.

The samples were evaluated for the following items in the following manner.

### <Appearance>

The appearance of the transfer foil 2 was visually observed from the side closer to the support 1, and evaluated to determine whether the laminate of the first resin layer 3, the second resin layer 4, the relief forming layer 5 was transparent. A laminate that was transparent was evaluated as good, and a laminate in which turbidity or the like was observed was evaluated as poor.

### <Pressure resistance>

The transfer foil 2 was transferred to a transfer object (paper) using a hot-stamping transfer device to prepare an evaluation sample. The transferred transfer foil 2 was visually observed to evaluate whether cracks occurred The transfer conditions were a transfer temperature of 110° C., a pressure of 29 MPa (300 Kgf/cm²) and a transfer time of 1 second. The case in which no cracks were observed was rated as good, and the case where cracks were observed was rated as poor.

### <Heat resistance>

An iron heated to 170°C was pressed for 10 seconds against the surface of the transfer foil 2 transferred to the transfer object, and then the transfer foil 2 was visually observed. The transfer foil 2 was evaluated to determine whether the surface of the transfer foil (the surface of the first resin layer 3) or the relief structure 6 was damaged. A transfer foil 2 that was unchanged after the iron was pressed against it was evaluated as good. For those evaluated as poor, the tables show specifically how the transfer foil 2 was changed. When the iron was heated at 170°C for 10 seconds, the foil was heated to approximately 130°C. That is, the temperature of the foil did not reach the embossing temperature of the foil, thus preventing damage to the surface of the transfer foil or the relief structure 6.

### <Relief structure accuracy>

The height, pitch, and shape of the uneven portions of the relief structure 6 shaped on the relief forming layer 5 were compared with those of the uneven portions of the relief structure of the metal cylinder used for processing, and the relief structure 6 in which the accuracy was 90% or more (the difference relative to the metal cylinder was less than 10%) was evaluated as good.

### <Transferability>

The transfer foil 2 was transferred to a transfer object (paper) using a hot-stamping transfer device including a marking tool having a circular shape to prepare an evaluation sample. The transfer foil 2 was visually observed after transfer, and the maximum length of a portion (transfer burr) different from the circular shape was evaluated. In the measurement of the maximum length, the distance from the contact point of the transfer burr with the contour of the circular portion to the farthest point of the transfer burr was measured. The vertical transfer conditions were a transfer temperature of 110° C., a pressure of 29 MPa (300 Kgf/cm²), and a transfer time of 1 second. For each sample number, five samples were evaluated according to the following three criteria.
Good: Maximum length of transfer burr was less than 1 mm in all the samples. Fair: Transfer burr with a length of 1 mm or more was observed in some of the samples. Poor: Transfer burr with a length of 1 mm or more was observed in all the samples.

### Amendments for prosecution at the EPO regional phase

In Fig. 3, sample numbers 1 and 2 showed good results for all the evaluation items, but sample numbers 3 to 5 showed poor results for the appearance and the heat resistance. For the appearance, the copolymerization of other monomers involved in the acrylic resin presumably led to poor resin compatibility, causing turbidity. The low heat resistance was presumably caused by the excessively low Tg of the acrylic resin.

Sample numbers 4 and 5 had a large transfer burr. This is presumably because, due to the excessively low Tg of the acrylic resin, the first resin layer 3 was melted by heat generated during transfer.

In Fig. 3, in comparison of the evaluation results for sample numbers 1 and 6, in sample number 6, the occurrence of transfer cracks was observed in the evaluation of the pressure resistance. Furthermore, sample number 6 showed a poor evaluation result for the transferability.

In Fig. 4, the samples other than sample numbers 11 to 13 showed a poor result for at least one of the pressure resistance, heat resistance, relief structure accuracy, and transferability. In the samples in which the mixing ratio of cellulose ester resin in the second resin layer 4 was low (sample numbers 7 to 9), the low ratio of cellulose ester resin presumably caused insufficient heat resistance of the second resin layer 4. In sample number 10, the second resin layer 4 and the relief forming layer 5 contained the same ratio of cellulose ester resin; thus, the two layers had no difference in melting point (or no difference in temperature dependence of flexural modulus). The two layers formed a substantially single thick layer, which is presumed to be the cause of the large transfer burr. On the other hand, in sample number 14, the excessively high mixing ratio of cellulose ester resin in the second resin layer 4 presumably caused poor pressure resistance and transferability.

In Fig. 5, the samples other than sample numbers 16 to 19 showed a poor result for at least one of the heat resistance, relief structure accuracy, and transferability. In the samples in which the mixing ratio of cellulose ester resin in the relief forming layer 5 was low (sample number 15), the low ratio of cellulose ester resin presumably caused insufficient heat resistance of the relief forming layer 5. In sample numbers 20 to 22, the same ratio of cellulose ester resin in the second resin layer 4 and the relief forming layer 5 (sample number 20) or the excessively high ratio of cellulose ester resin in the second resin layer 4 and the relief forming layer 5 (sample numbers 21 and 22) is presumed to be the cause of poor relief structure accuracy and transferability.

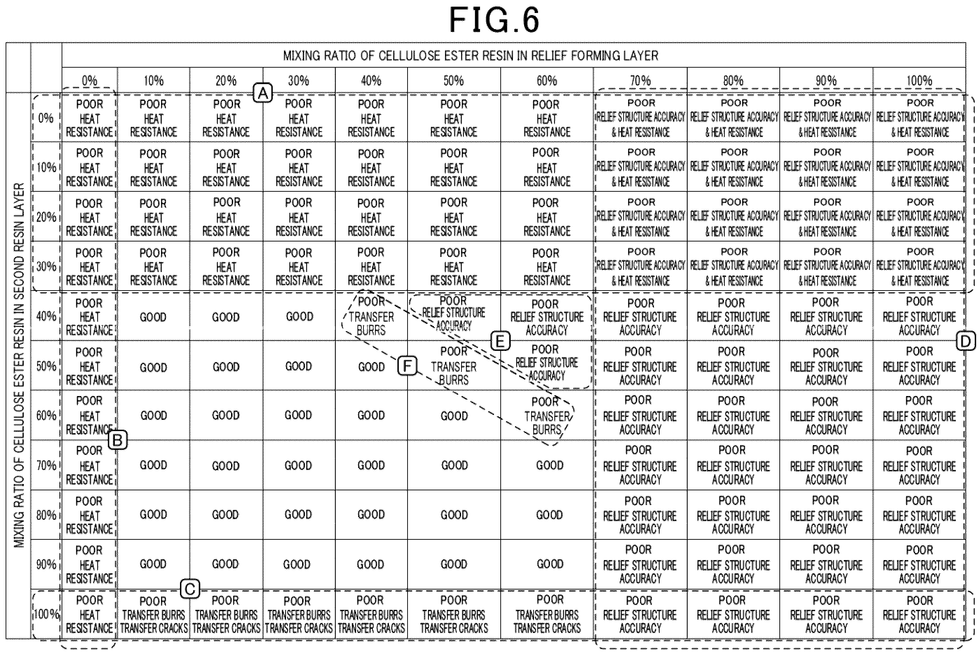

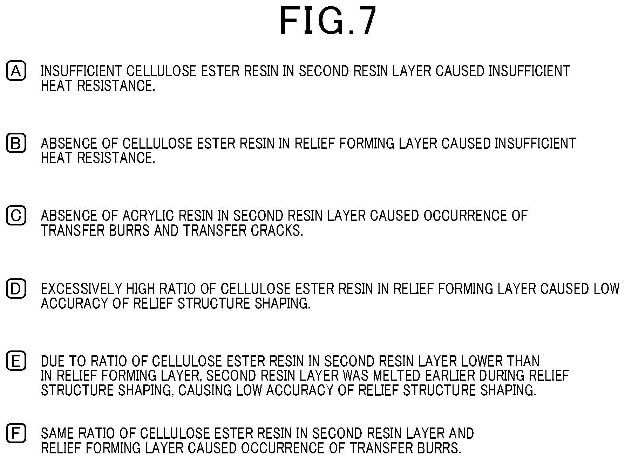

Fig. 6 is a table collectively showing the results in Figs. 3 to 5 in a matrix based on the mixing ratio of cellulose ester resin in each of the second resin layer 4 and the relief forming layer 5. The mixing ratios of cellulose ester resin in the second resin layer 4 and the relief forming layer 5 with a poor evaluation result presumably caused by the same reason are grouped together into regions A to F. Fig. 7 collectively shows presumed reasons for the regions.

According to Fig. 6, the following conditions presumably need to be satisfied. That is, the mixing ratio of cellulose ester resin in the second resin layer 4 is 40% or more and 90% or less, and the mixing ratio of cellulose ester resin in the relief forming layer 5 is 10% or more and 60% or less. Furthermore, the mixing ratio of cellulose ester resin in the second resin layer 4 is higher than the mixing ratio of cellulose ester resin in the relief forming layer 5. These conditions presumably need to be satisfied to obtain the best evaluation results.

### [Industrial Applicability]

A transfer foil according to the present invention is, due to its characteristics, applicable to a transfer foil that has a relief structure and is required to have high durability, in particular such as a security, a banknote, an ID card, or a passport.

### [Reference Signs List]

- 1: Support
- 2: Transfer foil
- 3: First resin layer
- 4: Second resin layer
- 5: Relief forming layer

## Claims

1. A transfer foil (2) separably supported by a support (1), the transfer foil comprising
a first resin layer (3), a second resin layer (4), and a relief forming layer (5) in this order from a side closer to the support, **characterized in that**
the first resin layer is composed of an acrylic resin having a glass transition temperature Tg of 95°C or higher,
the second resin layer and the relief forming layer are composed of a mixture of the acrylic resin, and a cellulose ester resin in which some of hydroxyl groups are urethane crosslinked, and
the second resin layer has a higher melting point than the relief forming layer.

2. The transfer foil according to claim 1, wherein the acrylic resin is a polymer obtained by polymerizing only methyl methacrylate (MMA) monomers.

3. The transfer foil according to claim 1 or 2, wherein a mixing ratio of the cellulose ester resin in the second resin layer is higher than a mixing ratio of the cellulose ester resin in the relief forming layer.

4. The transfer foil according to any one of claims 1 to 3, wherein the cellulose ester resin contains at least one of cellulose acetate butyrate, cellulose acetate propionate, and cellulose nitrate.

5. The transfer foil according to any one of claims 1 to 4, wherein a mixing ratio of the cellulose ester resin in the second resin layer is 40% or more and 90% or less, and a mixing ratio of the cellulose ester resin in the relief forming layer is 10% or more and 60% or less.

6. The transfer foil according to any one of claims 1 to 5, wherein the urethane crosslinking includes a benzene ring.

## Patentansprüche

1. Transferfolie (2), die von einem Träger (1) abtrennbar getragen ist, wobei die Transferfolie folgendes umfasst:
eine erste Harzschicht (3), eine zweite Harzschicht (4) und eine reliefbildende Schicht (5) in dieser Reihenfolge von einer Seite näher zu dem Träger, **dadurch gekennzeichnet, dass**
die erste Harzschicht aus einem Acrylharz mit einer Glasübergangstemperatur Tg von 95°C oder höher zusammengesetzt ist,
die zweite Harzschicht und die reliefbildende Schicht aus einer Mischung des Acrylharzes und eines Celluloseesterharzes, in dem einige Hydroxylgruppen Urethan-vernetzt sind, zusammengesetzt sind und
die zweite Harzschicht einen höheren Schmelzpunkt als die reliefbildende Schicht aufweist.

2. Transferfolie gemäß Anspruch 1, in der das Acrylharz ein Polymer ist, das durch Polymerisieren von ausschließlich Methylmethacrylat (MMA)-Monomeren erhalten wurde.

3. Transferfolie gemäß Anspruch 1 oder 2, in der ein Mischungsanteil des Celluloseesterharzes in der zweiten Harzschicht höher ist als ein Mischungsanteil des Celluloseesterharzes in der reliefbildenden Schicht.

4. Transferfolie gemäß mindestens einem der Ansprüche 1 bis 3, in der das Celluloseesterharz mindestens einen Vertreter von Celluloseacetat-Butyrat, Celluloseacetat-Propionat und Cellulosenitrat enthält.

5. Transferfolie gemäß mindestens einem der Ansprüche 1 bis 4, in der ein Mischungsanteil des Celluloseesterharzes in der zweiten Harzschicht 40 % oder mehr und 90 % oder weniger ist und ein Mischungsanteil des Celluloseesterharzes in der reliefbildenden Schicht 10 % oder mehr und 60 % oder weniger ist.

6. Transferfolie gemäß mindestens einem der Ansprüche 1 bis 5, in der die Urethan-Vernetzung einen Benzolring einschließt.

## Revendications

1. Feuille (2) de transfert soutenue de manière séparable par un support (1), la feuille de transfert comprenant
une première couche (3) de résine, une seconde couche (4) de résine et une couche (5) de formation de relief dans cet ordre depuis un côté plus proche du support, **caractérisée en ce que**
la première couche de résine est composée d'une résine acrylique présentant une température de transition vitreuse Tg de 95 °C ou plus,
la seconde couche de résine et la couche de formation de relief sont composées d'un mélange de la résine acrylique et d'une résine d'ester de cellulose dans laquelle certains des groupes hydroxyles sont à réticulation uréthane, et
la seconde couche de résine présente un point de fusion supérieur à celui de la couche de formation de relief.

2. Feuille de transfert selon la revendication 1, dans laquelle la résine acrylique est un polymère obtenu par polymérisation uniquement de monomères de méthacrylate de méthyle (MMA).

3. Feuille de transfert selon la revendication 1 ou la revendication 2, dans laquelle un rapport de mélange entre la résine d'ester de cellulose et la seconde couche de résine est supérieur à un rapport de mélange entre la résine d'ester de cellulose et la couche de formation de relief.

4. Feuille de transfert selon l'une quelconque des revendications 1 à 3, dans laquelle la résine d'ester de cellulose contient au moins un parmi le butyrate d'acétate de cellulose, le propionate d'acétate de cellulose et le nitrate de cellulose.

5. Feuille de transfert selon l'une quelconque des revendications 1 à 4, dans laquelle un rapport de mélange entre la résine d'ester de cellulose et la seconde couche de résine est de 40 % ou plus et de 90 % ou moins, et un rapport de mélange entre la résine d'ester de cellulose et la couche de formation de relief est de 10 % ou plus et de 60 % ou moins.

6. Feuille de transfert selon l'une quelconque des revendications 1 à 5, dans laquelle la réticulation uréthane inclut un cycle benzène.
